# EUROPEAN PATENT APPLICATION

(11) **EP 4 783 340 A1**
(43) Date of publication of application: **29.07.2026**
(21) Application number: 25867244.3
(22) Date of filing: 19.11.2025
(51) Int. Cl.: H01M 50/367, H01M 50/105, H01M 50/184, H01M 50/211, H01M 50/24, H01M 50/242, H01M 50/358, H01M 50/383

(54) **BATTERY MODULE AND BATTERY PACK COMPRISING SAME**

(30) Priority: 04.12.2024 KR 20240178283
(71) Applicant: LG Energy Solution Ltd., Seoul 07335 (KR)
(72) Inventor: KIM, Kwang Mo, Daejeon 34122 (KR); JUNG, Hye Mi, Daejeon 34122 (KR); LEE, Jung Hoon, Daejeon 34122 (KR); LEE, Joo Hyoung, Daejeon 34122 (KR)
(74) Representative: BCKIP Part mbB
(86) International application number: PCT/KR2025/019132
(87) International publication number: WO 2026/121640

(57) **Abstract**

A battery module according to an embodiment of the present disclosure may include: pouch cells arranged in a first direction, each of the pouch cells including an electrode lead protruding in a second direction perpendicular to the first direction; a module frame configured to accommodate the pouch cells and open in the second direction, the module frame including a top plate positioned above the pouch cells; a vent suppression structure between the pouch cells and the top plate; and a first end plate coupled to the module frame in the second direction and including first vent holes.

## Description

### [Technical Field]

The present disclosure relates to a battery module and a battery pack including the same.

This application is based on and claims priority from Korean Patent Application No. 10-2024-0178283, filed on December 4, 2024, with the Korean Intellectual Property Office, the disclosure of which is incorporated herein in its entirety by reference.

### [Background]

A secondary battery may be used repeatedly for an extended period of time through recharging. Secondary batteries are used in various fields such as mobility, portable electronic devices, and energy storage systems (ESSs). In particular, the demand for secondary batteries for mobility is increasing further in order to reduce dependence on fossil fuels and decrease carbon emissions. However, concerns regarding safety issues such as thermal runaway events still remain in secondary batteries, and these issues remain an important challenge that needs to be addressed.

In the field of mobility, multiple battery cells are used to ensure performance metrics such as power output and driving range. Typically, these battery cells are arranged into battery modules, and a battery pack consisting of a plurality of battery modules is installed in the vehicle. In this configuration, the battery cells within a single module are positioned adjacent to one another, and the battery modules that configure the battery pack are also positioned adjacent to one another. Consequently, if a thermal runaway event occurs in some battery cells, thermal propagation to adjacent battery cells can easily occur. If this thermal propagation occurs in a chain reaction, it can lead to a major explosion or fire.

When a thermal runaway event occurs, high-temperature gases and other substances inside the battery cells may vent in random directions. To prevent major explosions or fires, technology capable of controlling the direction of venting is required.

### [Summary]

### [Technical Problem]

The technical problem to be solved by the present disclosure is to provide a battery module capable of controlling a venting direction.

### [Technical Solution]

Some embodiments of the present disclosure capable of solving the above-mentioned problems are as follows.

A battery module according to an embodiment may include:
a plurality of pouch cells arranged in a first direction, each of the plurality of pouch cells including an electrode lead protruding in a second direction perpendicular to the first direction;
a module frame configured to accommodate the plurality of pouch cells and open in the second direction, the module frame including a top plate positioned above the plurality of pouch cells;
a vent suppression structure between the plurality of pouch cells and the top plate; and
a first end plate coupled to the module frame in the second direction and including a plurality of first vent holes.

In an embodiment, the vent suppression structure may include a first surface facing the plurality of pouch cells, and the first surface may be flat.

In an embodiment, the vent suppression structure may include a first surface facing the plurality of pouch cells, and the first surface may include protrusions.

In an embodiment, the vent suppression structure may include a second surface facing the top plate, and the second surface may be flat.

In an embodiment, the second surface may be in contact with the top plate.

In an embodiment, the vent suppression structure may not include a vent hole.

In an embodiment, the top plate may not include a vent hole.

In an embodiment, the battery module may include a second end plate that is coupled to the module frame in the second direction and spaced apart from the first end plate in the second direction with the plurality of pouch cells interposed therebetween.

In an embodiment, the second end plate may include a plurality of second vent holes.

In an embodiment, the second end plate may not include a vent hole.

### [Advantageous Effects]

The battery module according to the embodiments of the present disclosure may include a vent suppression structure between the top plate and the pouch cells, so as to guide a venting direction to the front and/or rear.

The effects of the embodiments of the present disclosure are not limited to those mentioned above, and other effects not mentioned may be clearly derived and understood by those ordinarily skilled in the art from the following description. That is, even unintended effects resulting from the implementation of the embodiments of the present disclosure may also be clearly derived and understood by those ordinarily skilled in the art.

### [Brief Description of the Drawings]

FIG. 1 is a perspective view of a battery module according to a first embodiment.
FIG. 2 is an exploded perspective view of the battery module according to the first embodiment.
FIG. 3 is a view illustrating a pouch cell.
FIG. 4 is a view illustrating a portion of the internal structure of the battery module according to the first embodiment.
FIG. 5 is a view illustrating a portion of the internal structure of the battery module according to a second embodiment.

### [Best Mode for Carrying out the Invention]

The terms and words used herein should not be construed as being limited to their ordinary or dictionary meanings, but should be interpreted in accordance with the spirit of the present disclosure based on the principle that an inventor may appropriately define the meanings of terms and words to best describe the invention.

In the present disclosure, the terms such as "include" or "have" are intended to specify the presence of features, numbers, steps, operations, components, elements, or combinations thereof described in the disclosure, and should be understood as not precluding the possibility of the presence or addition of one or more other features, numbers, steps, operations, components, elements, or combinations thereof. In addition, when a part such as a layer, film, region, or plate is described as being "on" another part, this includes not only a case where the part is directly on the other part, but also a case where another part is interposed therebetween. Conversely, when a part such as a layer, film, region, or plate is described as being "under" another part, this includes not only a case where the part is directly under the other part, but also a case where another part is interposed therebetween.

It should be understood that the embodiments and drawings are merely examples of the present disclosure and do not represent the entirety of the technical spirit of the present disclosure, and that various equivalents and modified examples capable of replacing them may exist.

In describing the present disclosure, detailed descriptions of known configurations or functions will be omitted when they are deemed to obscure the gist of the present disclosure.

The drawings are provided to more completely illustrate the present disclosure to those ordinarily skilled in the art. Therefore, the shapes, sizes, and other aspects of the components illustrated in the drawings may be exaggerated, omitted, or schematically illustrated for clarity. The shapes, sizes, proportions, and numbers of respective components in the drawings do not necessarily reflect those of the actual components.

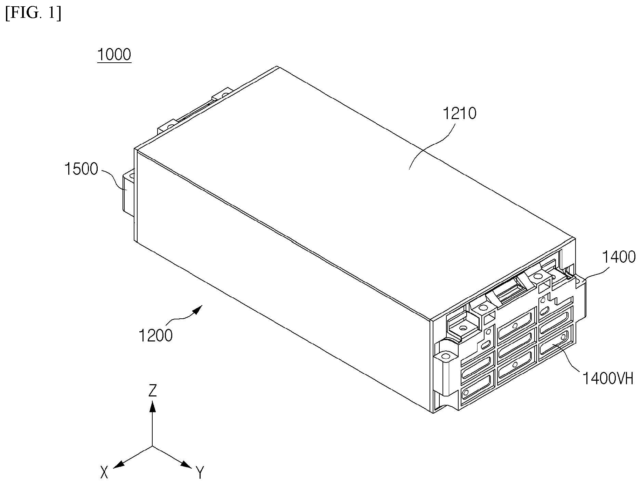

For the convenience of explanation, a three-dimensional Cartesian coordinate system is used in the present disclosure to describe the positions, shapes, and relationships of components. The X-axis, Y-axis, and Z-axis are indicated in FIGS. 1 to 5. Herein, the "X direction" refers to a direction parallel to the X-axis. The "+X direction" refers to the same direction as the arrow of the X-axis indicated in FIGS. 1 to 5. The "-X direction" refers to the direction opposite to the arrow of the X-axis indicated in FIGS. 1 to 5. Herein, the "Y direction" refers to a direction parallel to the Y-axis. The "+Y direction" refers to the same direction as the arrow of the Y-axis indicated in FIGS. 1 to 5. The "-Y direction" refers to the direction opposite to the arrow of the Y-axis indicated in FIGS. 1 to 5. Herein, the "Z direction" refers to a direction parallel to the Z-axis. The "+Z direction" refers to the same direction as the arrow of the Z-axis indicated in FIGS. 1 to 5. The "-Z direction" refers to the direction opposite to the arrow of the Z-axis indicated in FIGS. 1 to 5.
Hereinafter, embodiments of the present disclosure will be described in detail with reference to the accompanying drawings.

### (First Embodiment)

FIG. 1 is a perspective view of a battery module according to a first embodiment of the present disclosure.

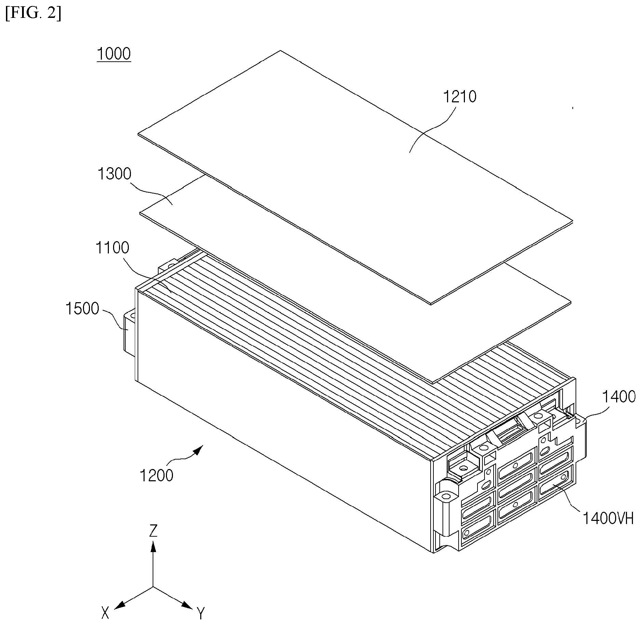

FIG. 2 is an exploded view of the battery module according to the first embodiment of the present disclosure.

Referring to FIGS. 1 and 2, a battery module 1000 may include a plurality of pouch cells 1100, a module frame 1200, a vent suppression structure 1300, a first end plate 1400, and a second end plate 1500.

The pouch cell 1100 may include an electrode assembly, electrode tabs, electrode leads 1110N and 1110P, an electrolyte, and a pouch film.

The electrode assembly may include a positive electrode, a negative electrode, and a separator. The positive electrode may include a positive electrode active material layer and a positive electrode current collector. The negative electrode may include a negative electrode active material layer and a negative electrode current collector. The electrode assembly may be of a jelly-roll type or a stacked type. The jelly-roll type may have a structure in which the positive electrode, the negative electrode, and the separator are wound. The stacked type may have a structure in which a first electrode unit including a first positive electrode, a first negative electrode, and a first separator, and a second electrode unit including a second positive electrode, a second negative electrode, and a second separator are stacked with a third separator interposed therebetween. The electrolyte may be of a liquid type or a gel type.

The electrode tabs may include positive electrode tabs and negative electrode tabs. The positive electrode tabs may be coupled to the positive electrode current collector. The positive electrode tabs may be welded to the positive electrode current collector. The negative electrode tabs may be coupled to the negative electrode current collector. The negative electrode tabs may be welded to the negative electrode current collector.

The electrode lead 1110N may be coupled to negative electrode tabs. The electrode lead 1110N may be welded to the negative electrode tabs. In addition, the electrode lead 1110P may be coupled to positive electrode tabs. The electrode lead 1110P may be welded to the positive electrode tabs. The electrode lead 1110N and the electrode lead 1110P may protrude in opposite directions or in the same direction. In the present disclosure, only embodiments in which the electrode lead 1110N and the electrode lead 1110P protrude in opposite directions will be described. Those ordinarily skilled in the art to which the present disclosure pertains would readily understand embodiments in which the electrode lead 1110N and the electrode lead 1110P protrude in the same direction based on the present disclosure.

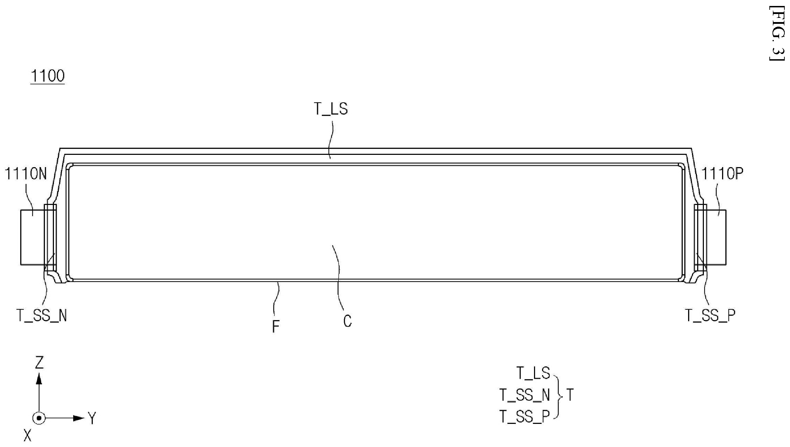

FIG. 3 is a view illustrating a pouch cell.

Referring to FIG. 3, the pouch cell 1100 may have a substantially rectangular shape. The pouch cell 1100 may include a center portion C, a terrace portion T, a folding portion F, and electrode leads 1110N and 1110P. In FIG. 3, the electrode lead 1110N protrudes in the - Y direction and the electrode lead 1110P protrudes in the +Y direction. However, conversely, the electrode lead 1110N may protrude in the +Y direction and the electrode lead 1110P may protrude in the -Y direction. The orientation of the electrode leads 1110N and 1110P of each of the plurality of pouch cells 1100 may be determined according to a connection method of the plurality of pouch cells 1100, which will be described later.

An electrode assembly may be located in the center portion C. The center portion C may be a portion of the pouch cell 1100 protruding in the X direction. The thickness of the center portion C in the X direction may be greater than the thickness of the terrace portion T in the X direction. The thickness of the center portion C in the X direction may also be greater than the thickness of the folding portion F in the X direction.

The terrace portion T may be located at an edge of the center portion C. A portion of the terrace portion T may be sealed, and another portion may remain unsealed. The unsealed portion of the terrace portion T may be located at the edge of the center portion C, and the sealed portion of the terrace portion T may be located at an edge of the unsealed portion of the terrace portion T.

According to an embodiment, the unsealed portion of the terrace portion T may be referred to as a gas pocket portion. Even if a thermal runaway event does not occur in the pouch cell 1100, gas may be generated inside the pouch cell 1100 when the pouch cell 1100 is charged and discharged multiple times or when a temperature of the pouch cell 1100 increases above a certain level. The gas pocket portion may accommodate gas generated inside the pouch cell 1100. The gas pocket portion, which accommodates the gas generated inside the pouch cell 1100, may expand.

According to an embodiment, the sealed portion of the terrace portion T may be referred to as a sealing portion SP. The sealing portion SP may be a portion where pouch films are bonded by, for example, heat fusion. As described above, even if gas is generated inside the pouch cell 1100 and the internal pressure of the pouch cell 1100 increases, the sealing state of the pouch cell 1100 may be maintained by the sealing portion SP. However, when an accident such as a thermal runaway event occurs in the pouch cell 1100 and a large amount of high-temperature gas is excessively generated inside the pouch cell 1100, resulting in excessive internal pressure, the high-temperature gas may release the sealing of the sealing portion SP and may be vented to the outside of the pouch cell 1100. In this case, if the vent suppression structure 1300 is not present, the high-temperature gas may be vented in a random direction.

The terrace portion T may include a long side portion T_LS and short side portions T_SS_N and T_SS_P. The long side portion T_LS may be connected to the center portion C in the +Z direction. The short side portions T_SS_N and T_SS_P may be spaced apart from each other in the Y direction with the center portion C interposed therebetween. The short side portion T_SS_N may be connected to the center portion C in the -Y direction. The short side portion T_SS_N may be located between the -Y direction end of the electrode lead 1110N and the center portion C. The short side portion T_SS_P may be connected to the center portion C in the +Y direction. The short side portion T_SS_P may be located between the +Y direction end of the electrode lead 1110P and the center portion C. The long side portion T_LS may be located between the short side portion T_SS_N and the short side portion T_SS_P. The -Y direction end of the long side portion T_LS may be connected to the short side portion T_SS_N, and the +Y direction end of the long side portion T_LS may be connected to the short side portion T_SS_P.

The folding portion F may be located at an edge of the center portion C. The folding portion F may be unsealed. The folding portion F may be connected to the center portion C in the -Z direction. The folding portion F may be formed in a process in which an electrode assembly and electrode tabs are placed on a single pouch film, and the pouch film is folded so as to wrap the electrode assembly and the electrode tabs. When two pouch films are used (e.g., placing the electrode assembly and electrode tabs on one pouch film, covering them with another pouch film, and bonding the two pouch films by heat fusion), a terrace portion T may be located at the position of the folding portion F.

The plurality pouch cells 1100 may be arranged in the X direction. The plurality of pouch cells 1100 may be configured as banks. The banks may include a first bank, intermediate banks, and a last bank. Each bank may include pouch cells 1100 connected in parallel to each other. The orientations of the electrode leads 1110N and 1110P of the respective pouch cells 1100 forming one bank may be the same. The banks may be connected in series. In two adjacent banks, the orientations of the electrode leads 1110N and 1110P of the respective pouch cells 1100 forming one bank may be opposite to those of the respective pouch cells 1100 forming the other bank. When the pouch cells 1100 include n banks, and each of the n banks includes m pouch cells, the connection method of the pouch cells 1100 may be referred to as m parallel-n series. The connection method of the plurality of pouch cells 1100 included in the battery module 1000 may be determined according to the required current and voltage of the battery module 1000.

The module frame 1200 may accommodate the plurality of pouch cells 1100. The material of the module frame 1200 may include one or more of aluminum, an aluminum alloy, steel, or stainless steel. The module frame 1200 may be open in the Y direction. The module frame 1200 may include a top plate 1210 above the plurality of pouch cells 1100. The top plate 1210 may be spaced apart from the plurality of pouch cells 1100 in the Z direction. The module frame 1200 may be formed by coupling a U-frame and the top plate 1210 by, for example, welding. The module frame 1200 may be an integrated mono frame, and the top plate 1210 may be a portion of the mono frame. In some embodiments, the top plate 1210 may not include a vent hole. The top plate 1210 may be substantially perpendicular to the Z direction.

The vent suppression structure 1300 may be positioned between the plurality of pouch cells 1100 and the top plate 1210. The vent suppression structure 1300 may suppress high-temperature gas from being vented through the long side portion T_LS of the pouch cell 1100 and may guide the high-temperature gas to be vented through the short side portions T_SS_N and/or T_SS_P when an accident such as a thermal runaway event occurs in the pouch cell 1100 and an excessive amount of high-temperature gas is generated inside the pouch cell 1100, resulting in an excessively high internal pressure. The vent suppression structure 1300 may suppress the venting direction of the battery module 1000 from being directed upward. Here, "upward" refers to the +Z direction. The vent suppression structure 1300 may guide the venting direction of the battery module 1000 forward and/or rearward. Here, the "forward" refers to the +Y direction, and the "rearward" refers to the -Y direction.

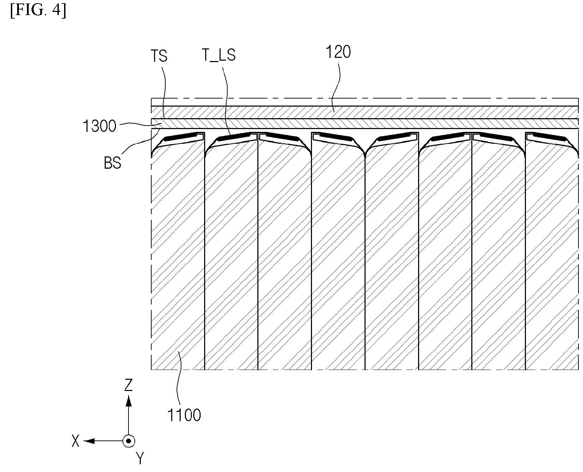

FIG. 4 is a view illustrating a portion of the internal structure of the battery module according to the first embodiment of the present disclosure.

Referring to FIG. 4, the long side portion T_LS of each pouch cell 1100 accommodated in the module frame 1200 may be folded toward the center portion C. Accordingly, the internal space of the module frame 1200 may be utilized efficiently. As a non-limiting example, the long side portion T_LS may be fixed to the center portion C using, for example, adhesive tape.

The material of the vent suppression structure 1300 may be a flame-retardant material. For example, the material of the vent suppression structure 1300 may include one or more of ceramic, silicone, and mica. The vent suppression structure 1300 may be a foam, pad, or plate.

The vent suppression structure 1300 may include a first surface BS facing the plurality of pouch cells 1100 and a second surface TS facing the top plate 1210. The first surface BS may be referred to as the bottom surface of the vent suppression structure 1300, and the second surface TS may be referred to as the top surface of the vent suppression structure 1300. The first surface BS and the second surface TS may be flat. The second surface TS of the vent suppression structure 1300 may be in contact with the top plate 1210. The second surface TS of the vent suppression structure 1300 may be in contact with the bottom surface of the top plate 1210. As a non-limiting example, the vent suppression structure 1300 and the top plate 1210 may be bonded together by, for example, an adhesive or double-sided tape. In an embodiment, the vent suppression structure 1300 may not include a vent hole.

The first surface BS may be spaced apart from or in contact with the long side portion T_LS in the Z direction. However, when an accident such as a thermal runaway event occurs in the pouch cell 1100 and high-temperature gas starts to be generated inside the pouch cell 1100, causing the long side portion T_LS and the short side portions T_SS_N and T_SS_P to swell, the first surface BS may come into contact with the long side portion T_LS. As the first surface BS of the vent suppression structure 1300 comes into contact with the swollen long side portion T_LS, the flow of high-temperature gas continuously generated inside the pouch cell 1100 may be guided toward at least one of the short side portions T_SS_N and T_SS_P rather than the long side portion T_LS. The high-temperature gas may be vented to the outside of the pouch cell 1100 by releasing the sealing of the sealing portion of at least one of the short side portions T_SS_N and T_SS_P rather than that of the long side portion T_LS.

The first end plate 1400 may be coupled to the module frame 1200 in the +Y direction. The second end plate 1500 may be coupled to the module frame 1200 in the -Y direction. The first end plate 1400 and the second end plate 1500 may be spaced apart from each other in the Y direction with the plurality of pouch cells 1100 interposed therebetween. The first end plate 1400 and the second end plate 1500 may be made of a material having high rigidity and heat resistance.

One of the first end plate 1400 and the second end plate 1500 may include an outer positive bus bar hole configured to expose a portion of the positive bus bar to the outside of the battery module 1000 and an outer negative bus bar hole configured to expose a portion of the negative bus bar to the outside of the battery module 1000.

The first end plate 1400 may include first vent holes 1400VH, and the second end plate 1500 may or may not include second vent holes. Whether the second end plate 1500 includes the second vent holes may be determined based on the layout of the battery modules 1000 included in the battery pack. Through the first vent holes 1400VH, high-temperature gas, which has caused the sealing of the sealing portion of at least one of the short side portions T_SS_N and T_SS_P to be released, may be vented to the outside of the battery module 1000. When the second end plate 1500 includes the second vent holes, the second vent holes may perform substantially the same function as the first vent holes 1400VH.

A first bus bar frame and a first insulation cover may be interposed between the first end plate 1400 and the plurality of pouch cells 1100. The first bus bar frame may cover the plurality of pouch cells 1100 in the +Y direction, the first insulation cover may cover the first bus bar frame in the +Y direction, and the first end plate 1400 may cover the first insulation cover in the +Y direction. A second bus bar frame and a second insulation cover may be interposed between the second end plate 1500 and the plurality of pouch cells 1100. The second bus bar frame may cover the plurality of pouch cells 1100 in the -Y direction, the second insulation cover may cover the second bus bar frame in the -Y direction, and the second end plate 1500 may cover the second insulation cover in the -Y direction. The materials of the first bus bar frame and the second bus bar frame may be materials having high electrical insulation and flame resistance. The materials of the first insulation cover and the second insulation cover may be materials having high electrical insulation and flame resistance.

One of the first and insulation covers may include an inner positive bus bar hole configured to expose a portion of the positive bus bar to the outside of the battery module 1000, and an inner negative bus bar hole configured to expose a portion of the negative bus bar to the outside of the battery module 1000.

One of the first and second bus bar frames may support the positive bus bar, the intermediate bus bars, and the negative bus bar, and the other of the first bus bar frame and the second bus bar frame may support the intermediate bus bars. Electrode leads 1110P of the first bank may be welded to the positive bus bar. Electrode leads 1110N of the last bank may be welded to the negative bus bar. At least one of the electrode leads 1110P and 1110N of the corresponding one of the intermediate banks may be welded to each intermediate bus bars. The intermediate bus bars may have a substantially O-shaped structure.

### (Second Embodiment)

The second embodiment is substantially identical to the first embodiment except for the shape of the vent suppression structure 1300' , and thus, descriptions of the components substantially identical to those of the first embodiment will be omitted.

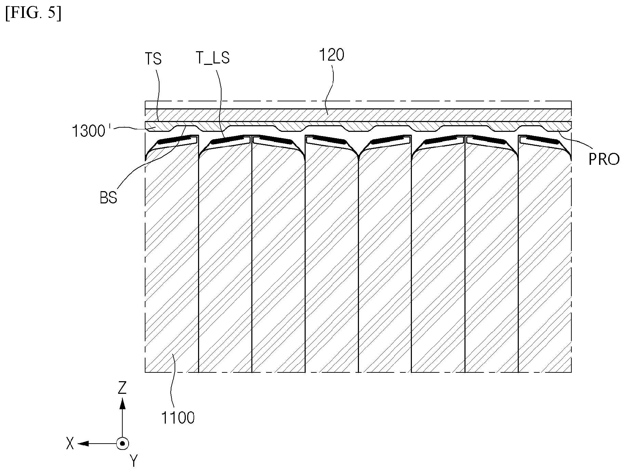

FIG. 5 is a view illustrating a portion of the internal structure of the battery module according to the second embodiment.

Referring to FIG. 5, a first surface BS of the vent suppression structure 1300' may include protrusions PRO. Each of the protrusions PRO may protrude toward a long side portion T_LS of the corresponding one of the pouch cells 1100. Each of the protrusions PRO may be spaced apart from the long side portion T_LS of the corresponding one of the pouch cells 1100 in the Z direction, or may be in contact with the long side portion T_LS of the corresponding one of the pouch cells 1100. However, when an accident such as a thermal runaway event occurs in the pouch cell 1100 and high-temperature gas starts to be generated inside the pouch cell 1100, thereby causing the long side portion T_LS and the short side portions T_SS_N and T_SS_P to swell, each of the protrusions PRO comes into contact with the long side portion T_LS of the corresponding one of the pouch cells 1100. As each of the protrusions PRO comes into contact with the swollen long side portion T_LS of the corresponding one of the pouch cells 1100, the flow of high-temperature gas that continues to be generated inside the pouch cell 1100 may be guided toward at least one of the short side portions T_SS_N and T_SS_P rather than the long side portion T_LS. Eventually, the high-temperature gas may be vented to the outside of the pouch cell 1100 after releasing the sealing of the sealing portion of at least one of the short side portions T_SS_N and T_SS_P, rather than the long side portion T_LS.

The above description is merely intended to illustrate the present disclosure by way of example. The scope of the present disclosure should be interpreted based on the claims, and all technical ideas within the equivalent or substantially equivalent scope thereof should be construed as being included within the scope of the present disclosure.

### [Description of Reference Numerals]

1000: BATTERY MODULE
1100: POUCH CELL
1110N, 1110P: ELECTRODE LEAD
C: CENTER PORTION
T: TERRACE PORTION
T_LS: LONG SIDE PORTION
T_SS_N, T_SS_P: SHORT SIDE PORTION
F: FOLDING PORTION
1200: MODULE FRAME
1210: TOP PLATE
1300, 1300': VENT SUPPRESSION STRUCTURE
1400: FIRST END PLATE
1400VH: FIRST VENT HOLE
1500: SECOND END PLATE

## Claims

1. A battery module comprising:
a plurality of pouch cells arranged in a first direction, each of the plurality of pouch cells including an electrode lead protruding in a second direction perpendicular to the first direction;
a module frame configured to accommodate the plurality of pouch cells and open in the second direction, the module frame including a top plate positioned above the plurality of pouch cells;
a vent suppression structure between the plurality of pouch cells and the top plate; and
a first end plate coupled to the module frame in the second direction and including a plurality of first vent holes.

2. The battery module of claim 1, wherein
the vent suppression structure includes a first surface facing the plurality of pouch cells, and
the first surface is flat.

3. The battery module of claim 1, wherein
the vent suppression structure includes a first surface facing the plurality of pouch cells, and
the first surface includes protrusions.

4. The battery module of claim 1, wherein
the vent suppression structure includes a second surface facing the top plate, and
the second surface is flat.

5. The battery module of claim 4, wherein
the second surface is in contact with the top plate.

6. The battery module of claim 1, wherein
the vent suppression structure does not include a vent hole.

7. The battery module of claim 1, wherein
the top plate does not include a vent hole.

8. The battery module of claim 1, further comprising:
a second end plate that is coupled to the module frame in the second direction and spaced apart from the first end plate in the second direction with the plurality of pouch cells interposed therebetween.

9. The battery module of claim 8, wherein
the second end plate includes a plurality of second vent holes.

10. The battery module of claim 9, wherein
the second end plate does not include a vent hole.
